# EUROPÄISCHE PATENTSCHRIFT

(11) **EP 3 490 828 B1**
(45) Veröffentlichungstag und Bekanntmachung des Hinweises auf die Patenterteilung: **23.09.2020**
(21) Anmeldenummer: 17745149.9
(22) Anmeldetag: 17.07.2017
(51) Int. Cl.: B60J 5/04

(54) **AUSBRECHELEMENT FÜR EINEN ALS NASS-/TROCKENRAUMTRENNUNG AUSGEFÜHRTEN MODULTRÄGER EINER TÜR ODER KLAPPE EINES KRAFTFAHRZEUGS**
BREAK-OUT ELEMENT FOR A MODULE SUPPORT, WHICH IS DESIGNED AS A WET/DRY AREA SEPARATION, OF A DOOR OR FLAP OF A MOTOR VEHICLE
ÉLÉMENT DE RUPTURE POUR SUPPORT DE MODULE, RÉALISÉ SOUS LA FORME D'UNE SÉPARATION ESPACE HUMIDE/ESPACE SEC, D'UNE PORTE OU D'UN OUVRANT D'UN VÉHICULE AUTOMOBILE

(30) Priorität: 21.07.2016 DE 102016008728
(43) Veröffentlichungstag der Anmeldung: 05.06.2019
(73) Patentinhaber: Brose Fahrzeugteile SE & Co. Kommanditgesellschaft, Bamberg, 96052 Bamberg (DE)
(72) Erfinder: BÅÅTH, Magnus, 43341 Partille (SE); THELIN, Peter, 41674 Göteborg (SE)
(74) Vertreter: Maikowski & Ninnemann Patentanwälte Partnerschaft mbB
(86) Internationale Anmeldenummer: PCT/EP2017/067997
(87) Internationale Veröffentlichungsnummer: WO 2018/015335

(56) Entgegenhaltungen:
- DE-A1- 19 824 130
- DE-A1-102005 033 116
- DE-U1-202004 020 237
- GB-A- 2 090 318

## Beschreibung

Die Erfindung betrifft ein Ausbrechelement für einen als Nass-/Trockenraumtrennung ausgeführten Modulträger einer Tür oder Klappe eines Kraftfahrzeugs gemäß dem Oberbegriff des Anspruchs 1. Das erfindungsgemäße Ausbrechelement gewährleistet bei Bedarf einen einfachen und sicheren Zugang für ein Werkzeug, z. B. um eine Fensterscheibe von einer Fensterheber-Mechanik zu trennen.

Aus DE 10 2005 033 116 A1 ist ein gattungsgemäßes Ausbrechelement bekannt, das einen ringförmig umlaufenden Schwächungsbereich aufweist. Dieser vom Schwächungsbereich eingefasste Teilabschnitt eines Aggregateträgers ist durch Krafteinwirkung herausbrechbar, um hierdurch eine Serviceöffnung freizugeben.

Diese technische Lösung ist zwar äußerst einfach gestaltet, sie weist jedoch auch Nachteile auf. Wegen des Fehlens von definierten Handhabungselementen kann die Serviceöffnung mittels eines Werkzeugs, z. B. eines Schraubendrehers, nur bedingt kontrolliert freigebrochen werden. Hierbei kann es zu ungewollten Beschädigungen von dahinter liegenden Teilen kommen. Des Weiteren könnte das ausgebrochene Teil in den Nassraum fallen, was eine aufwändige Demontage des Aggregateträgers erforderlich machen würde, wenn man Klappergeräusche während der Fahrt sicher vermeiden wollte. Da also nur vergleichsweise wenig Kraft zum Ausbrechen des die Serviceöffnung verschließenden Teils aufgewendet werden kann, muss der Schwächungsbereich mit einer besonders dünnen Materialwandstärke versehen werden. Dies wiederum birgt das Risiko, dass die Schwächungsbereiche selbst oder der davon eingeschlossene Bereich während des Spritzgießprozesses des Aggregateträgers nicht mehr ausreichend mit Kunststoffschmelze versorgt werden. Hierdurch wäre die Dichtheit des Aggregateträgers nicht mehr gewährleistet.

Ähnliche technische Lösungen sind aus DE 198 24 130 A1 und DE 103 60 794 A1 bekannt, bei denen in einem Blechbauteil bzw. einem Aggregateträger Sollbruchstellen vorgesehen sind. Mit dem Bruch der Sollbruchstellen werden Öffnungen freigegeben, die als Montageöffnungen oder zum Durchgriff von Bauteilen dienen können.

Des Weiteren sind aus DE 10 2011 116 134 A1 und DE 20 2004 020 237 U1 Sollbruchstelen bekannt, die über ein anzusetzendes Schraubwerkzeug aufgebrochen werden können.

Der Erfindung liegt also das Problem zugrunde, die voranstehend genannten Nachteile zu beseitigen, ohne jedoch den Spritzgießprozess zu verändern oder auf eine Spritzgießwerkzeug mit Schiebern zurückgreifen zu müssen.

Erfindungsgemäß weist das Ausbrechelement die Form eines Topfes auf, wobei der diesen Topf tragende Schwächungsbereich zwischen dem freien Rand eines randseitigen Topfrings und dem Boden des Topfes angeordnet ist. Dabei überragt einerseits der randseitige Topfring die dem Nassraum zugewandte Seite des Modulträgers und andererseits der bodenseitige Topfring die dem Trockenraum zugewandte Seite des Modulträgers. Sollte der Schwächungsbereich jedoch außerhalb der Basisebene des Modulträgers angeordnet sein, so gilt das voranstehend beschriebe analog.

Der über den Modulträger vorstehende und den randseitigen Topfring beinhaltende Bereich des topfförmigen Ausbrechelements ist dabei derart gestaltet, dass dieser Bereich als Betätigungsring für den Zugriff eines Werkzeugs, insbesondere einer Zange, geeignet ist. Die Angriffsfläche des Betätigungsringes kann glatt oder gerieft ausgebildet sein. Um Spezialwerkzeug für das Ausbrechelement vermeiden zu können, sollten dessen äußere Abmessungen auf ein Minimum der Größe der zu erzeugenden Serviceöffnung reduziert werden und in einem Bereich liegen, die von gängigen Zangen oder dergleichen erfasst werden können.

Das Ausbrechen des Ausbrechelements kann in einfacher Weise dadurch geschehen, dass mit einer Zange am Betätigungsring Druck ausgeübt wird, bis das Material im Schwächungsbereich nachgibt und sich das Ausbrechelement in diesem Bereich vom Modulträger löst. Durch ein Umsetzen der Zange an Bereiche, die noch nicht gelöst wurden, wird in Umfangsrichtung nach und nach das Ausbrechelement vom Modulträger gelöst.

Bei Verwendung einer kreisrunden rotationssymmetrischen oder einer anderen polygonartigen symmetrischen Kontur eines im Wesentlichen topf artigen Ausbrechelements ist es praktisch ausgeschlossen, dass das Ausbrechelement versehentlich in den Nassraum fallen kann. Darüber hinaus gewährleistet die erfindungsgemäße Topfform, dass das Ausbrechelement mit gut dosierbarer Kraft vom Modulträger gelöst werden kann, was auch Beschädigungen am Rand der Serviceöffnung vermeiden hilft.

Noch wichtiger aber ist der Vorteil, dass die Möglichkeit des gezielten Einsatzes vergleichsweise hoher Kräfte es auch erlaubt, die Wandstärke der als Sollbruchstelle ausgeführten Schwächungsbereiche dicker zu gestalten. Hierdurch kann stets sichergestellt werden, dass die Schwächungsbereiche und die davon eingeschlossene Wandung vollständig von Kunststoff ausgespritzt und somit wasserdicht sind.

Insbesondere bei dem Erfordernis, vergleichsweise hohe Ausbrechkräfte aufwenden zu müssen, ist eine Stabilisierung des für das Werkzeug (Zange) vorgesehenen Betätigungsrings sinnvoll. Anstatt einer größeren Wandstärke sollten auf der Innenseite des Topfes radial ausgerichtete Versteifungsrippen angeordnet werden. Eine solche Rippenstruktur gewährleistet, dass die Betätigungskraft tatsächlich auf den Schwächungsbereich der Sollbruchstelle übertragen wird und dass der Betätigungsring dabei nicht implodiert.

Im Zusammengang mit der Rippenstruktur und der Anbindung des Ausbrechelements über den Schwächungsbereich an den Modulträger ist es auch vorteilhaft, eine stufig ausgeführte Topfform zu wählen. Dabei schließt sich an den randseitigen Topfring der topfförmigen Kontur des Ausbrechelements ein radial nach innen vorspringender Absatz an, der in einen bodenseitigen Topfring geringeren Durchmessers übergeht. Die Anbindung des Topfes an den Modulträger erfolgt demnach über den Schwächungsbereich am äußeren Rand des Betätigungsringes, der mit der Kontur des Absatzes zusammenläuft, der den randseitigen Topfring größeren Durchmessers und den bodenseitigen Topfring kleineren Durchmessers verbindet.

Für den Fall, dass der Schwächungsbereich vergleichsweise dünnwandig ausgebildet werden soll und hierrüber eine Versorgung des davon umrandeten Bereichs mit Kunststoffschmelze nicht zuverlässig erreicht werden kann, sollte zwischen dem Topf und dem Modulträger, vorzugsweise zwischen wenigstens einer der Versteifungsrippen und dem Modulträger ein zusätzlicher Fließbereich für den Transport der Kunststoffschmelze vorgesehen sein. Dieser zusätzliche, ausschließlich dem Transport der Kunststoffschmelze dienende Steg vergrößert die notwendige Ausbrechkraft nur unwesentlich.

An dieser Stelle sei noch einmal darauf hingewiesen, dass die Grundkontur des Topfes eine von der Rotationssymmetrie eines im Wesentlichen kreisförmigen Topfes abweichen kann, ohne die wesentlichen erfindungsgemäßen Vorteile zu schmälern. Derartige Konturen könnten beispielsweise der Kontur einer Ellipse oder eines Vierecks mit abgerundeten Ecken oder eines anderen im Wesentlichen konvex konturierten Vielecks mit polygonaler Kontur ähneln.

Nachfolgend wird die Erfindung anhand eines Ausführungsbeispiels und der nachstehenden Figuren näher beschrieben. Es zeigen:
- Figur 1: perspektivische Darstellung eines in einer Basis (Modulträger) einstückig integrierten Ausbrechelements;
- Figur 2a: Draufsicht auf das Ausbrechelement gemäß Figur 1 von der Trockenraumseite;
- Figur 2b: Seitenansicht des Ausbrechelements gemäß Figur 1 mit Modulträger;
- Figur 2c: Draufsicht auf das Ausbrechelement gemäß Figur 1 von der Nassraumseite;
- Figur 3a: Schnittdarstellung des Ausbrechelements zwischen den Rippen;
- Figur 3b: Schnittdarstellung des Ausbrechelements durch zwei gegenüberliegende Rippen und dort platzierte Fließbereiche für die Kunststoffschmelze;
- Figur 4: Draufsicht auf ein deformiertes und dadurch teilweise vom Modulträger gelöstes Ausbrechelement;
- Figur 5a: Schnittdarstellung eines Ausschnitts von Ausbrechelement und Modulträger im Bereich der Sollbruchstelle (Schwächungsbereich) vor dem Abriss;
- Figur 5b: Schnittdarstellung eines Ausschnitts von Ausbrechelement und Modulträger im Bereich der Sollbruchstelle (Schwächungsbereich) im Moment des Abrisses.

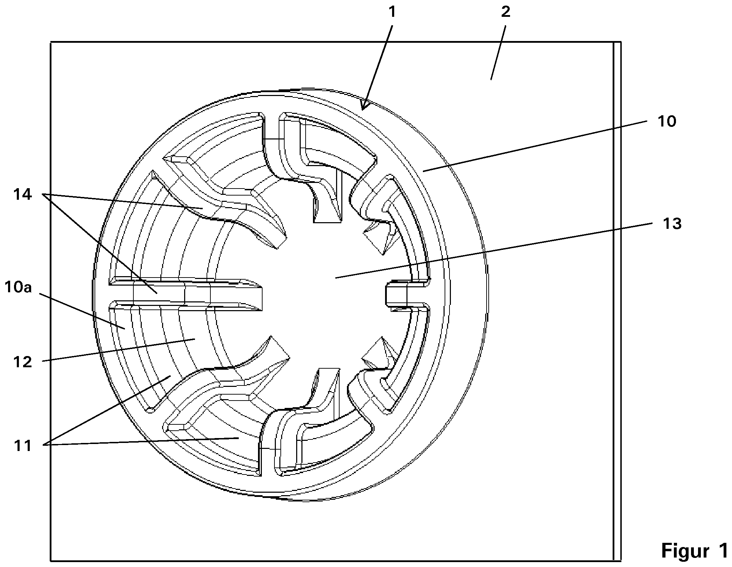

Das in Figur 1 dargestellte und im Modulträger 2 integrierte Ausbrechelement 1 weist (abgesehen von seinen innerhalb des Topfes liegenden Versteifungsrippen **14)** eine rotationssymmetrische Struktur auf. Dadurch kann ein Werkzeug, vorzugsweise eine Zange, beliebig an der äußeren Kontur zum Ausbrechen des Ausbrechelements an der vom Betätigungsring 10 gebildeten äußeren Struktur angesetzt werden. Die Versteifungsrippen 14 verleihen dem Betätigungsring einerseits die ausreichende Festigkeit, die für die Übertragung der Abrisskräfte im Schwächungsbereich 21 notwendig sind. Andererseits gewährleisten die radial ausgerichteten Rippen 14, dass das Ausbrechelement 1 von der Trockenraumseite her hinreichend deformiert werden kann.

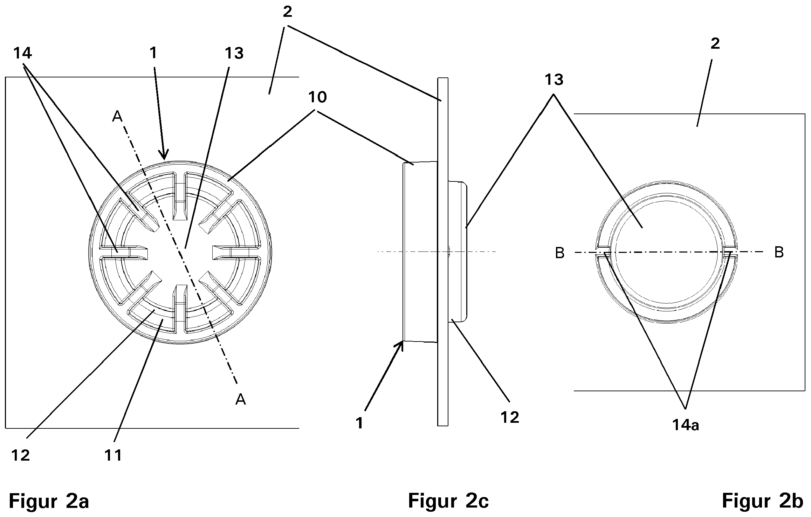

Um die für die Trennung des Ausbrechelements notwendige Kraft auch bei dickeren Wandstärken im Bereich der Sollbruchstelle (Schwächungsbereich 21) sicher und gut handhabbar übertragen zu können, hat sich eine mehrstufige, insbesondere zweistufige Topfkontur bewährt. Hierbei schließt sich an den randseitigen Topfring 10a der topfförmigen Kontur ein radial nach innen vorspringender Absatz 11 an, der in einen bodenseitigen Topfring 12 geringeren Durchmessers übergeht. Der bodenseitige Topfring 12 endet schließlich im Boden 13 der Topfkontur, wobei der Boden 13 die angrenzende Ebene des Modulträgers 2 in Richtung der Nassraumseite überragt. Diese Konfiguration ist am besten in der Zusammenschau der Figuren 2a bis 3b zu erkennen.

Bei der dargestellten zweistufigen topfförmigen Ausbildung des Ausbrechelements 1 ist es besonders vorteilhaft, wenn der Schwächungsbereich 21 und somit die Anbindung des Topfes 1 an den Modulträger 2 am äußeren Rand des Betätigungsringes 10 erfolgt, der mit der Kontur des Absatzes 11 zusammenläuft. Somit bildet sich ein in Umfangsrichtung verlaufende Kanal 15, der die für die walkende Deformation des oberhalb des Bodens 13 liegenden Bereichs des Ausbrechelements 1 notwendige Bewegungsfreiheit zur Verfügung stellt.

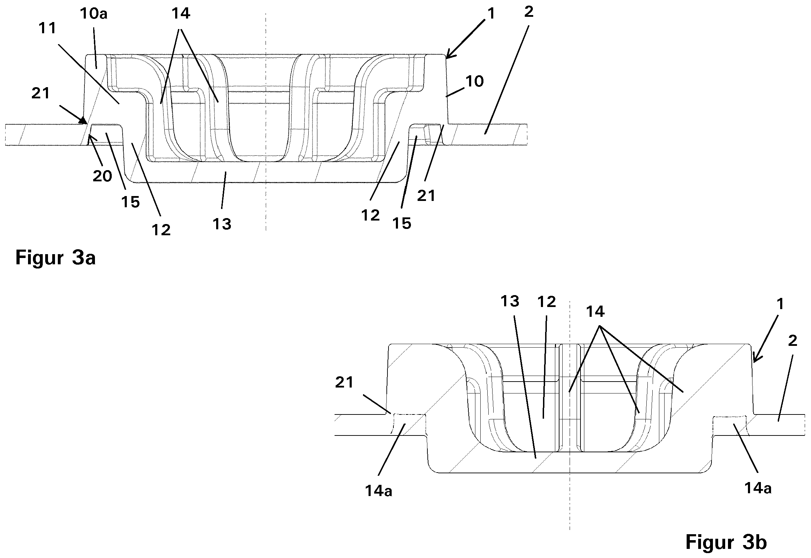

Gemäß dem vorliegenden Ausführungsbeispiel (siehe Figur 2b in Verbindung mit den Figuren 3a und 3b) ist der umlaufende Kanal 15 in den Ebenen von zwei Rippen 14 unterbrochen und somit direkt mit dem angrenzenden Modulträger 2 verbunden. Diese Verbindungen stellen Fließbereiche 14a dar, durch die hindurch die Kunststoffschmelze zum Aufbau der Struktur des Ausbrechelements 1 fließen kann. Derartige Fließbereiche sind vor allem dann sinnvoll, wenn Kunststoffschmelzen mit hohem Faseranteil und eingeschränkter Fließfähigkeit zur Anwendung kommen, für die die sehr dünnwandigen Schwächungsbereiche 21 nur schlecht passierbar wären.

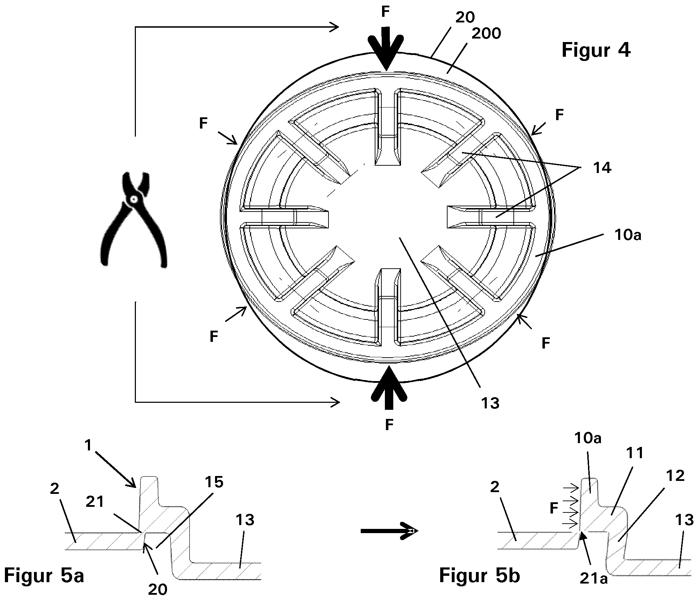

Figur 4 zeigt schematisch wie unter Einwirkung radial wirkender Betätigungskräfte F das Ausbrechelement 1 am oberen und unteren Rand abgelöst wurde, so dass bereits Teile des Lochrandes 20 des Modulträgers 2, einschließlich einer sichelförmigen Lochöffnung sichtbar werden. Beim händischen Umsetzen des Zangenwerkzeugs und Einwirkung auf die seitlichen Bereiche des Ausbrechelements 1 würden sich die noch verbliebenden Verbindungen vom Modulträger 2 lösen und das Ausbrechelement könnte zur Freigabe der Serviceöffnung 200 entnommen werden.

Die schematischen Schnittdarstellungen der Figuren 5a und 5b zeigen den Schwächungsbereich 21 vor dem Einwirken einer radialen Abreißkraft bzw. beim Einwirken der Abreißkraft im Moment des Abreißens des betreffenden topfförmigen Bereichs 1 vom Modulträger 2, wobei das Material im Schwächungsbereich vor allem auf Scherung beansprucht wird.

### Bezugszeichenliste

- 1: Ausbrechelement; Topf
- 10: Betätigungsring
- 10a: randseitiger Topfring
- 11: Absatz
- 12: bodenseitiger Topfring
- 13: Boden
- 14: Rippe
- 14a: Fließbereich für Kunststoffschmelze
- 15: Kanal

- 2: Modulträger
- 20: Lochrand
- 21: Schwächungsbereich (Sollbruchstelle)
- 200: Lochöffnung

- F: Betätigungskraft (radial wirkend)

## Patentansprüche

1. Ausbrechelement (1) für einen als Nass-/Trockenraumtrennung ausgeführten Modulträger (2) einer Tür oder Klappe eines Kraftfahrzeugs, wobei das Ausbrechelement (1) über wenigstens einen Schwächungsbereich (21) geringerer Materialdicke mit dem angrenzenden Material des Modulträgers (2) integral verbunden ist, und wobei der Schwächungsbereich (21) als Sollbruchstelle fungiert und zumindest einen Teil der Berandung einer Zugangsöffnung bildet,
**dadurch gekennzeichnet,**
**dass** das Ausbrechelement (1) die Form eines Topfes aufweist, wobei der Schwächungsbereich (21) zwischen dem freien Rand eines randseitigen Topfrings (10a) und dem Boden (13) des Topfes angeordnet ist.

2. Ausbrechelement nach Anspruch 1, **dadurch gekennzeichnet, dass** der über den Modulträger (2) vorstehende Bereich des topfförmigen Ausbrechelements (1) als Betätigungsring (10) derart ausgebildet ist, dass dieser eine für ein Werkzeug, z. B. eine Zange, geeignete Angriffsfläche bietet.

3. Ausbrechelement nach wenigstens einem der voranstehenden Ansprüche, **dadurch gekennzeichnet, dass** sich an den randseitigen Topfring (10a) der topfförmigen Kontur des Ausbrechelements (1) ein radial nach innen vorspringender Absatz (11) anschließt, der in einen bodenseitigen Topfring (12) geringeren Durchmessers übergeht.

4. Ausbrechelement nach wenigstens einem der voranstehenden Ansprüche, **dadurch gekennzeichnet, dass** der bodenseitige Topfring (12) zumindest teilweise die angrenzende Ebene des Modulträgers (2) in Richtung der Nassraumseite überragt.

5. Ausbrechelement nach wenigstens einem **der voranstehenden Ansprüche, dadurch gekennzeichnet, dass** der Schwächungsbereich (21) und somit die Anbindung des Topfes (1) an den Modulträger (2) am äußeren Rand des Betätigungsringes (10) erfolgt, der mit der Kontur des Absatzes (11) zusammenläuft, wobei ein Kanal (15) gebildet wird, der berandet ist
von dem inneren noch zu bildenden Lochrand (20) des Modulträger (2),
von der zu Nassraumseite weisenden Wandung des Absatzes (11) und
- von der nach außen weisenden Wandung des bodenseitigen Topfrings (12).

6. Ausbrechelement nach wenigstens einem der voranstehenden Ansprüche, **dadurch gekennzeichnet, dass** im Inneren des Topfes (1) eine aus radial gerichteten Rippen (14) gebildete Versteifungsstruktur angeordnet ist.

7. Ausbrechelement nach wenigstens einem der voranstehenden Ansprüche, **dadurch gekennzeichnet, dass** zwischen dem Topf (1) und dem Modulträger (2), vorzugsweise zwischen wenigstens einer Rippe (14) und dem Modulträger (2) ein zusätzlicher Fließbereich (14a) für den Transport der Kunststoffschmelze vorgesehen ist.

8. Ausbrechelement nach wenigstens einem der voranstehenden Ansprüche, **dadurch gekennzeichnet, dass** die Grundkontur des Topfes (1) eine von der Rotationssymmetrie abweichende Kontur aufweist, z. B. die Kontur einer Elipse oder eines Vierecks mit abgerundeten Ecken oder eines anderen konvex konturierten Vierecks.

## Claims

1. A break-out element (1) for a module support (2), which is designed as a wet/dry area separation, of a door or flap of a motor vehicle, wherein the break-out element (1) is integrally connected to the adjacent material of the module support (2) via at least one region of weakness (21) of lesser material thickness, and wherein the region of weakness (21) acts as a predetermined breaking point and forms at least part of the edge of an access opening, **characterized**
**in that** the break-out element (1) is in the shape of a cup, wherein the region of weakness (21) is arranged between the free edge of an edge-side cup ring (10a) and the base (13) of the cup.

2. The break-out element as claimed in claim 1, **characterized in that** that region of the cup-shaped break-out element (1) which protrudes over the module support (2) is designed as an actuating ring (10) in such a manner that the latter provides an engagement surface suitable for a tool, for example a pair of pliers.

3. The break-out element as claimed in at least one of the preceding claims, **characterized in that** the edge-side cup ring (10a) of the cup-shaped contour of the break-out element (1) is adjoined by radially inwardly projecting step (11) which merges into a base-side cup ring (12) of smaller diameter.

4. The break-out element as claimed in at least one of the preceding claims, **characterized in that** the base-side cup ring (12) at least partially protrudes over the adjacent plane of the module support (2) in the direction of the wet area side.

5. The break-out element as claimed in at least one of the preceding claims, **characterized in that** the region of weakness (21) and therefore the attachment of the cup (1) to the module support (2) takes place at the outer edge of the actuating ring (10) which converges with the contour of the step (11), wherein a channel (15) is formed which is folded
by the inner hole edge (20), which is still to be formed, of the module support (2),
by the wall of the step (11) facing the wet area side, and
by the outwardly facing wall of the base-side cup ring (12).

6. The break-out element as claimed in at least one of the preceding claims, **characterized in that** a stiffening structure formed from radially directed ribs (14) is arranged in the interior of the cup (1) .

7. The break-out element as claimed in at least one of the preceding claims, **characterized in that** an additional flow region (14a) for the transport of the plastics melt is provided between the cup (1) and the module support (2), preferably between at least one rib (14) and the module support (2).

8. The break-out element as claimed in at least one of the preceding claims, **characterized in that** the main contour of the cup (1) has a contour differing from rotational symmetry, for example the contour of an ellipse or of a square with rounded corners or of a different convexly contoured square.

## Revendications

1. Élément de rupture (1) pour un support de module (2), réalisé en tant que séparation espace humide/espace sec, d'une porte ou d'un ouvrant d'un véhicule automobile, dans lequel l'élément de rupture (1) est intégralement relié au matériau adjacent du support de module (2) par l'intermédiaire d'au moins une zone d'affaiblissement (21) de moindre épaisseur de matériau, et dans lequel la zone d'affaiblissement (21) fait office de point de rupture théorique et forme au moins une partie du rebord d'une ouverture d'accès,
**caractérisé en ce**
**que** l'élément de rupture (1) présente la forme d'un pot, dans lequel la zone d'affaiblissement (21) est disposée entre le bord libre d'un anneau (10a) côté bord et le fond (13) du pot.

2. Élément de rupture selon la revendication 1, **caractérisé en ce que** la zone, faisant saillie du support de module (2), de l'élément de rupture (1) en forme de pot est réalisée en tant qu'anneau d'actionnement (10) de telle manière que celui-ci offre une surface d'engagement adaptée pour un outil, par exemple une pince.

3. Élément de rupture selon au moins l'une quelconque des revendications précédentes, **caractérisé en ce que** se raccorde à l'anneau de pot (10a) côté bord du contour en forme de pot de l'élément de rupture (1) un retrait (11) faisant saillie radialement vers l'intérieur, qui devient un anneau de pot (12) côté fond de diamètre inférieur.

4. Élément de rupture selon au moins l'une quelconque des revendications précédentes, **caractérisé en ce que** l'anneau de pot (12) en forme de fond dépasse au moins en partie le plan adjacent du support de module (2) en direction du côté espace humide.

5. Élément de rupture selon au moins l'une quelconque des revendications précédentes, **caractérisé en ce que** la zone d'affaiblissement (21) et ainsi l'attache du pot (1) au support de module (2) se font au niveau du bord extérieur de l'anneau d'actionnement (10), qui coïncide avec le contour du retrait (11), dans lequel un canal (15) est formé, qui est encadré
par le bord perforé (20) intérieur encore à former du support de module (2),
par la paroi, pointant vers le côté espace humide, du retrait (11) et
par la paroi, pointant vers l'extérieur, de l'anneau de pot (12) côté fond.

6. Élément de rupture selon au moins l'une quelconque des revendications précédentes, **caractérisé en ce qu'**une structure de renforcement formée à partir de nervures (14) orientées radialement est disposée dans l'intérieur du pot (1).

7. Élément de rupture selon au moins l'une quelconque des revendications précédentes, **caractérisé en ce qu'**est prévue, entre le pot (1) et le support de module (2), de préférence entre au moins une nervure (14) et le support de module (2), une zone d'écoulement (14a) supplémentaire pour le transport de la matière fondue plastique.

8. Élément de rupture selon au moins l'une quelconque des revendications précédentes, **caractérisé en ce que** le contour de base du pot (1) présente un contour divergeant de la symétrie de rotation, par exemple le contour d'une ellipse ou d'un quadrilatère avec des angles arrondis ou d'un autre quadrilatère contouré de manière convexe.
